**Europäisches Patentamt**

**European Patent Office**

(19)

**Office européen des brevets**

(11) Veröffentlichungsnummer: **0 214 529 B1**

(12)

# EUROPÄISCHE PATENTSCHRIFT

(45) Veröffentlichungstag der Patentschrift:
02.01.91 Patentblatt 91/01

(51) Int. Cl.⁵: **G11B 7/08, G11B 7/09,**
**G11B 11/10**

(21) Anmeldenummer: **86111593.9**

(22) Anmeldetag: **21.08.86**

(54) Positioniereinrichtung für einen optischen Datenspeicher.

(30) Priorität: 27.08.85 DE 3530597

(43) Veröffentlichungstag der Anmeldung:
18.03.87 Patentblatt 87/12

(45) Bekanntmachung des Hinweises auf die
Patenterteilung:
02.01.91 Patentblatt 91/01

(84) Benannte Vertragsstaaten:
DE FR GB IT

(56) Entgegenhaltungen:
EP-A- 188 276
EP-A- 0 114 082
EP-A- 0 143 483
EP-A- 0 156 460
EP-A- 0 176 271
GB-A- 2 029 051
US-A- 3 898 629
US-A- 4 260 858
IBM TECHNICAL DISCLOSURE BULLETIN,
Band 15, Nr. 2, Juli 1972, Seiten 494,495,
Armonk, N.Y., US; R.L. GARWIN et al.: "Optics
for beam addressable files"

(56) Entgegenhaltungen:
PATENTS ABSTRACTS OF JAPAN, Band 7, Nr.
38 (P-176)[1183], 16. Februar 1983; & JP-A-57
189 354 (OLYMPUS KOGAKU KOGYO K.K.)
20.11.1982
PATENTS ABSTRACTS OF JAPAN, Band 8, Nr.
245 (P-312)[1682], 10. November 1984; &
JP-A-59 116 947 (SONY K.K.) 06.07.1984
PATENTS ABSTRACTS OF JAPAN, Band 8, Nr.
211 (P-303)[1648], 26. September 1984; &
JP-A-59 94254 (ASAHI KOUGAKU KOGYO
K.K.) 30.05.1984
PATENTS ABSTRACTS OF JAPAN, Band 7, Nr.
160 (P-210)[1305], 14. Juli 1983; & JP-A-58
68248 (TOKYO SHIBAURA DENKI K.K.)
23.04.1983
PATENTS ABSTRACTS OF JAPAN, Band 7, Nr.
206 (P-222)[1351], 10. September 1983; &
JP-A-58 102 346 (MATSUSHITA DENKI
SANGYO K.K.) 17.06.1983

(73) Patentinhaber: Siemens Aktiengesellschaft
Wittelsbacherplatz 2
D-8000 München 2 (DE)

(72) Erfinder: Moser, Erich, Ing. grad.
Dorfstrasse 8
D-8028 Taufkirchen (DE)
Erfinder: Gottfried, Norbert, Dr. rer. nat.
Schumannstrasse 30
D-8011 Baldham (DE)

**Beschreibung**

Die Erfindung bezieht sich auf eine Positioniereinrichtung für einen optischen Datenspeicher gemäß dem Oberbegriff des Hauptanspruches.

Bei Plattenspeichern, ob bei magnetischen Plattenspeichern oder auch optischen Speichern, spielen die Eigenschaften der jeweiligen Positioniereinrichtung schon immer eine wesentliche Rolle. Technologische Fortschritte ermöglichten die Erhöhung der Speicherkapazität, hier interessiert insbesondere die Erhöhung der Spurdichte, zugleich wurden aber auch alle Anstrengungen unternommen, die mittlere Zugriffszeit zu verkürzen, um die Leistungsfähigkeit des jeweiligen Plattenspeichers zu erhöhen.

Es hat daher nicht an Versuchen gefehlt, die an sich gegenläufigen Forderungen nach kurzer Zugriffszeit und hoher Spurdichte zu erfüllen. Bei einem Positioniersystem wird normalerweise immer eine bewegte Masse auftreten, die in einer im wesentlichen radial zu der Speicherplatte bewegten Abtasteinheit verkörpert ist. Insbesondere bei magnetischen Plattenspeichern ist es durch Fortschritte in der Technologie, vor allem auch bei den Magnetköpfen, gelungen, die notwendigerweise zu bewegende Masse wesentlich herabzusetzen und damit auch schnellere Positioniersysteme zu schaffen. Bei optischen Speichern ist die Massereduzierung wegen der optischen Abbildungssysteme weit schwieriger.

Relativ hohe Zugriffsgeschwindigkeit, d. h. eine schnelle Radialbewegung der Positioniereinrichtung bei Spurwechseln läßt sich außerdem bekanntlich leichter mit einer mehrstufig ausgeführten Positioniereinrichtung erreichen. Dabei erfolgt zunächst eine Grobpositionierung der Abtasteinheit, sei es magnetischer Schreib/Lesekopf oder optischer Abtaster, auf einen Spurbereich möglichst nahe der auszuwählenden Datenspur oder auf diese Spur selbst. Daran schließt sich eine Feinpositionierung an, die die Abtasteinheit auf die ausgewählte Spur einstellt und/oder diese Spurlage hält. Diese Aufteilung des Positioniervorganges in zwei Schritte mit einer hohen Translationsgeschwindigkeit in der ersten Phase und einer präzisen Feineinstellung in der zweiten Phase erlaubt im Mittel eine unter den gegebenen Randbedingungen optimierte Zugriffszeit unter Verwendung zweier Regelsysteme.

Optische Datenspeicher werden heute noch vielfach nur für Archivierungszwecke eingesetzt, so daß die mittlere Zugriffszeit bei fortlaufendem Schreiben oder Lesen großer Datenmengen noch keine ausschlaggebende Rolle spielt. Sollen aber optische Datenspeicher mit magnetischen Plattenspeichern konkurrieren, d. h. auch optische Datenspeicher für Betriebsarten mit häufigen Spurwechseln einsetzbar sein, dann müssen auch bei diesem Speichertyp sehr kurze Zugriffszeiten ermöglicht werden.

In diesem Zusammenhang ist aus EP-A 0 114 082 gemäß dem Oberbegriff von Anspruch 1 eine Positioniereinrichtung der eingangs genannten Art für einen optischen Datenspeicher bekannt, die als Linearpositionierer ausgebildet ist, d. h. auf einem Paar von Führungsstangen ist eine Abtasteinheit verschiebbar angeordnet. An den Führungsstangen ist zugleich auch der Antrieb für die Speicherplattenspindel festgelegt. Falls ein optisches System zum Erzeugen eines Abtaststrahles und zum Bewerten eines reflektierten Laserstrahles stationär angeordnet ist, ist auch dieses an den Führungsstangen festgelegt.

Während mit der bekannten Einrichtung die räumliche Ausrichtung voneinander entkoppelter Module im Vordergrund steht, weist sie darüber hinaus auch in eine Richtung, die von dem sogenannten integrierten, also alle optischen und optoelektronischen Elemente in sich vereinigenden Abtaster wegführt. Jedoch ist die Masse der beweglichen Abtasteinheit immer noch sehr hoch.

Ein anderes Lösungsprinzip wäre es, die absolute Weglänge des Abtastkopfes bei der Spurauswahl zu begrenzen. Ein Beispiel für Versuche in dieser Richtung ist aus IBM Technical Disclosure Bulletin Vol. 5, Nr. 2, Juli 1972, Seiten 494 und 495 bekannt. Dort wird statt einer einzigen Abbildungslinse eine Mehrzahl von nebeneinander angeordneten Linsen in einer Abtasteinheit vereinigt. Damit wird jeweils eine Gruppe von allerdings nicht unmittelbar nebeneinander liegenden Datenspuren selektierbar. Mit unterschiedlich abgelenkten Laserstrahlen wird über jede der Linsen eine einzige Datenspur aus dieser Gruppe ausgewählt. Die dazwischenliegenden Datenspuren müssen also durch mechanische Radialbewegung der Abtasteinheit selektiert werden.

Nachteilig bei dieser bekannten Lösung ist vor allem die Vervielfachung der optischen Abbildungselemente einschließlich einer großen Reflektorfläche im Strahlengang. Zur Spindeleinstellung und Spurverfolgung ist also immer eine große Masse mechanisch zu bewegen. Daß diese Eigenschaft die mögliche Spurdichte begrenzt, liegt auf der Hand.

Weiterhin ist aus US-A-4,260,858 eine Abtasteinrichtung für einen Videoplattenspeicher bekannt, die als Besonderheit keinen Plattentellerantrieb aufweist; statt dessen wird die Relativbewegung zwischen Speicherplatte und Abtasteinrichtung mit Hilfe von in den Abtastkopf eingebauten Antriebsmitteln erzeugt. Außerdem weist der Abtastkopf ein mechanisches Abtastorgan auf, das in einer Führungsnut der Speicherplatte läuft. Auf diese Weise wird der Abtastkopf radial positioniert. Damit soll ein kompliziertes Regelsystem für die radiale Positionierung eingespart werden. Weder dieses Antriebsprinzip noch eine derartige Positioniermethode haben sich aber bei optischen Datenspeichern durchgesetzt.

Deshalb ist im vorliegenden Fall lediglich von untergeordnetem Interesse, daß das optische Abbildungssystem des Abtastkopfes von einem als Hohlkörper ausgebildeten, rechtwinklig abgebogenen Schwenkarm getragen wird, in den der Abtastlichtstrahl eingespiegelt wird. In diesem Zusammenhang wird vorgeschlagen, falls erwünscht, im Knickpunkt des Schwenkarmes einen Drehspiegel mit einem eigenen Antrieb anzuordnen, um gegebenenfalls Feinkorrekturen der Lage des Abtastlichtstrahles vornehmen zu können.

Schließlich ist in dem nicht vorveröffentlichten Dokument EP-A1-0 188 276, das unter Art. 54(3) EPÜ fällt, eine Abtasteinrichtung für einen optischen Datenspeicher beschrieben, der eine stationär angeordnete Strahlungsquelle zugeordnet ist. Die Abtasteinrichtung weist ebenfalls einen als Hohlkörper ausgebildeten Schwenkarm auf, in den von der Seite her und vertikal zur Drehachse der von der Strahlungsquelle abgegebene Abtaststrahl eingespiegelt wird. Umlenkspiegel dienen als Führungsmittel für den Abtaststrahl, der über ein am Schwenkarm starr festgelegtes Objektiv auf eine Speicherplatte abgebildet wird. Das beschriebene System bildet eine Einrichtung zur Grobpositionierung. Für die Feinpositionierung in den beiden Richtungen parallel und vertikal zur Speicherplattenoberfläche ist eine Feinpositioniereinrichtung ebenfalls stationär im Strahlengang des Abtastlichtstrahles zwischen der Strahlungsquelle und dem ersten Umlenkspiegel des Schwenkarmes angeordnet.

Der vorliegenden Erfindung liegt daher die Aufgabe zugrunde, eine Positioniereinrichtung für einen optischen Datenspeicher der eingangs genannten Art derart weiterzubilden, daß die bei konventionellen optischen Datenspeichern, d. h. also Speichern mit wahlfreiem Zugriff im Vergleich zu anderen Speichern mit Relativbewegung immer noch zu hohen Zugriffszeiten verkürzt werden, indem einerseits die Masse der beweglichen Teile der Positioniereinrichtung weitgehend reduziert wird, so daß eine hohe Translationsgeschwindigkeit möglich wird und andererseits im Feinbereich die Spurauswahl bzw. -verfolgung mit möglichst geringen Massebewegungen erfolgen kann.

Diese Aufgabe wird erfindungsgemäß bei einer Positioniereinrichtung der eingangs genannten Art durch die im Kennzeichen des Hauptanspruches beschriebenen Merkmale gelöst.

Mit dieser Lösung ist eine Positioniereinrichtung für einen optischen Datenspeicher nach der Art eines Drehpositionierers geschaffen, deren Strahlengang alle Voraussetzungen dafür bietet, die Masse der notwendigerweise zu bewegenden Teile möglichst zu reduzieren. In dem gestellfest angeordneten optischen System sind alle optischen Einrichtungen vereinigt, die zum Erzeugen eines gebündelten, linear polarisierten Lichtstrahles dienen bzw. einen reflektierten Laserlichtstrahl aus diesem Strahlengang ausblenden. Mit Hilfe von auch diesem optischen System zuzurechnenden Detektoranordnungen ist dieser ausgeblendete reflektierte Laserstrahl zu bewerten, d. h. die Detektoranordnungen geben Rohdatensignale bzw. Fehlerkorrektursignale zur Spurauswahl und Nachregelung der vertikalen Fokussierung ab. Der im Strahlengang zwischen diesem optischen System und der beweglichen Abtasteinheit angeordnete Ablenkspiegel ist von der Abtasteinheit entkoppelt, trägt also nichts zu deren Masse bei.

Der gestellfest gelagerte Ablenkspiegel ist um eine zum Strahlengang senkrechte Achse zur Feinpositionierung der Spurlage um einen vorgegebenen Winkelbereich drehbar angeordnet. Damit ist sowohl die vertikale Nachführung des Abbildungssystems zur Nachregelung der Fokussierung einerseits und die Feinpositionierung in einem zweistufigen Positioniersystem andererseits von der Grobpositionierung mechanisch entkoppelt, so daß sich eine besonders einfache und massereduzierte Lösung für das Drehpositioniersystem zur Grobpositionierung des Laserlichtstrahles anbietet.

Die Abtasteinheit selbst enthält also neben dem notwendigerweise vorhandenen Antriebssystem für die Schwenkbewegung an optischen Elementen nur Ablenkeinrichtungen zum seitlichen Versetzen des Lichtstrahles und ein optisches Abbildungssystem zur Fokussierung dieses Strahles auf der Oberfläche der Speicherplatte. Dieses Abbildungssystem ist in vertikaler Richtung federnd an den radial beweglichen Teilen angelenkt. Damit ist ein geregeltes Nachfokussieren zum Ausgleichen von Fokusfehlern, die wegen des vertikalen Schlages der Speicherplatte auftreten, von der Radialbewegung des Abtastkopfes entkoppelt.

Ausgestaltungen der Erfindung sind in Unteransprüchen beschrieben und werden mit ihren Vorteilen im folgenden bei der Beschreibung eines Ausführungsbeispieles im Detail anhand der Zeichnung dargestellt. Dabei zeigt :

Fig. 1 in einer dreidimensionalen Darstellung schematisch den Strahlengang bei einem optischen Datenspeicher mit einer als Drehpositionierer ausgebildeten Positioniereinrichtung,

Fig. 2 eine schematische Darstellung der geometrischen Anordnung des Drehpositionierers bezüglich der Speicherplatte,

Fig. 3 einen Schnitt durch einen solchen Drehpositionierer, und

Fig. 4 eine dieser Schnittdarstellung entsprechende Draufsicht für den Drehpositionierer.

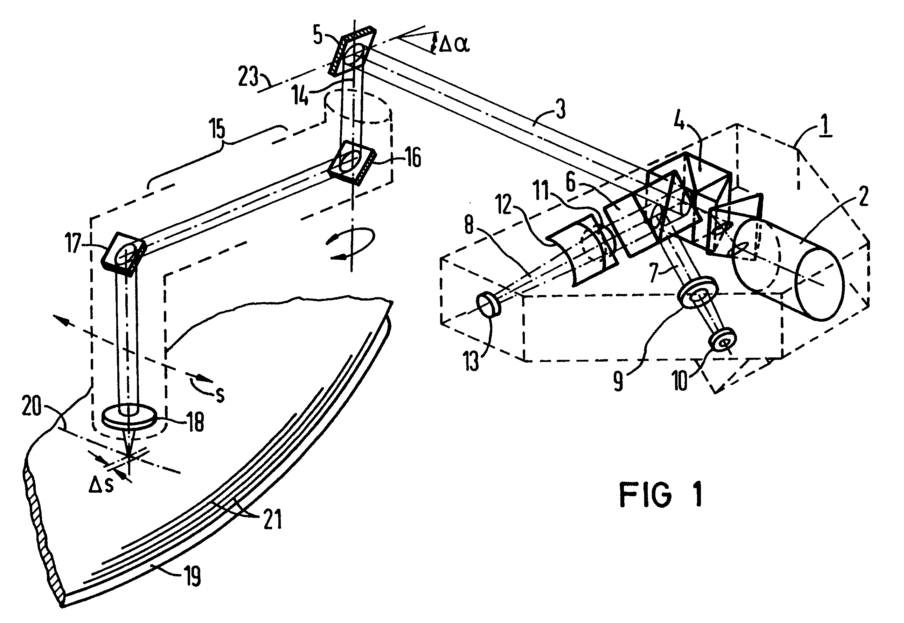

In Fig. 1 ist mit 1 eine gestellfeste Einheit bezeichnet, die das gesamte optische System zum Erzeugen von einem parallelen, linear polarisierten Laserlichtstrahl bzw. zum Ausblenden und Bewerten eines reflektierten Laserlichtstrahles enthält. Dieses optische System kann in konventioneller Weise ausgebildet sein und ist deshalb hier nur schematisch dargestellt. Es enthält eine Laserlichtquelle 2, deren ausgesandter divergierender und noch elliptisch verformter Laserlichtstrahl kollimiert und über zwei Prismen in einen Laserlichtstrahl 3 mit kreisförmigem Querschnitt umgeformt wird. Dieser Laserlichtstrahl wird einem polarisierenden Strahlteiler 4 zugeführt, der bezüglich der Polarisationsrichtung des einfallenden linear polarisierten Lichtbündels überwiegend durchlässig ist und den Laserlichtstrahl 3 in Richtung auf einen Ablenkspiegel 5 aussendet.

In umgekehrter Ausbreitungsrichtung fällt ein reflektierter Laserlichtstrahl in den polarisierenden Strahlteiler 4 ein, der nun diesen reflektierten Laserstrahl wegen der Umkehrung der Ausbreitungsrichtung teilweise seitlich auslenkt. Der ausgeblendete reflektierte Laserlichtstrahl trifft auf einen Polarisator 6, der das empfangene Licht in zwei linear polarisierte Teilstrahlen mit zueinander senkrechter Ausbreitungsrichtung aufspaltet. Der seitlich abgelenkte Teilstrahl 7 wird über eine schematisch angedeutete Sammellinse 9 auf eine erste Fotodetektoranordnung 10 fokussiert, während der vom Polarisator 6 durchgelassene Teilstrahl 8 durch eine weitere Sammellinse 11 und eine Zylinderlinse 12 auf eine weitere Detektoranordnung 13 abgebildet wird. Die beiden Fotodetektoren 10 bzw. 13 können als Quadrantendetektoren ausgebildet sein und so als Wandler für die Gewinnung von elektrischen Signalen dienen, die die Rohdatensignale bzw. Spurfehler- oder Fokusfehlersignale darstellen. Dies insoweit beschriebene optische System kann, wie erwähnt, durchaus in bei optischen Datenspeichern konventioneller Weise ausgebildet sein, so daß sich hier eine weitere detaillierte Schilderung erübrigt.

Wie oben angedeutet, wird der vom polarisierenden Strahlteiler 4 in einer horizontalen Ebene ausgesandt gebündelte Laserstrahl 3 durch den Ablenkspiegel 5 in die vertikale Richtung gedreht. Diese vertikale Richtung ist mit der Schwenkachse 14 eines in Fig. 1 schematisch angedeuteten Abtastkopfes 15 identisch. Mit Hilfe von zwei weiteren Ablenkspiegeln 16 bzw. 17 wird der in den Abtastkopf 15 einfallende Laserlichtstrahl achsenparallel seitlich versetzt und einem dem Abtastkopf 15 zugehörigen Abbildungssystem 18 zugeführt. Dieses Abbildungssystem besteht im wesentlichen aus einer Kollimatorlinse, die den Laserlichtstrahl auf die Oberfläche einer Speicherplatte 19 fokussiert.

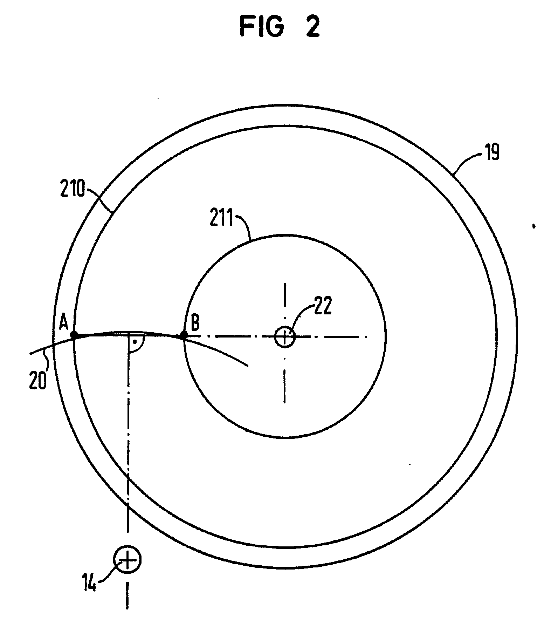

Wenn der Abtastkopf 15 um seine Schwenkachse 14, wie durch Pfeile angedeutet, seitlich ausgelenkt wird, dann verläuft die Spur 20 des fokussierten Laserlichtstrahles 3 auf der Speicherplatte 19 in einer zu den schematisch angedeuteten Datenspuren 21 im wesentlichen radialen Richtung. Schematisch ist die Geometrie dieser Anordnung des Abtastkopfes 15 bezüglich der Speicherplatte 19 in Fig. 2 angedeutet. Dort ist die Speicherplatte 19 mit ihrer Drehachse 22 gezeigt. Auf der Speicherplatte 19 ist der von den Datenspuren 21 belegte konzentrische Bereich durch Angabe der äußersten Datenspur 210 bzw. der innersten Datenspur 211 illustriert. In Fig. 2 ist ein Radialstrahl angegeben, der die äußerste Datenspur 210 in einem Punkt A bzw. die innerste Datenspur 211 in einem Punkt B schneidet. Der Schwenkbereich s eines Drehpositionierers muß nun ausreichend groß sein, damit die Spur 20 des fokussierten Laserlichtstrahles 3 mindestens den Bereich zwischen den Spurpunkten A, B überstreicht.

In der schematischen Darstellung von Fig. 2 ist die Schwenkachse 14 des Abtastkopfes 15 angedeutet, die mit seitlichem Abstand zur Drehachse 22 der Speicherplatte 19 auf der Mittelsenkrechten zwischen den beiden Spurpunkten A, B liegt. Der Abstand der Schwenkachse 14 von dem Radialstrahl mit den beiden Spurpunkten A, B ist nun derart ausreichend gewählt, daß sich die Spur 20 des fokussierten Laserlichtstrahles 3 dem Radialstrahl zwischen den beiden Spurpunkten A, B möglichst angleichend, diesen exakt zweimal schneidet. Dabei ist dann zwar das Feld der abgetasteten Tangenten der Datenspuren 21 nicht exakt parallel, jedoch sind die dabei auftretenden Bilddrehungen, die an den Fotodetektoren 10 bzw. 13 feststellbar sind, noch vernachlässigbar und verursachten jedenfalls keine Polarisationsdrehung des reflektierten Laserlichtstrahles 3.

In Fig. 1 ist schließlich noch angedeutet, daß der im Strahlengang des Laserlichtstrahles 3 zwischen dem optischen System 1 und dem Abtastkopf angeordnete Ablenkspiegel 5 um eine zu der Schwenkachse 14 senkrechte Achse 23 drehbar angeordnet ist. Der Schwenkbereich dieses Ablenkspiegels ist mit Δα bezeichnet. Durch ein derartiges geringfügiges Kippen des Ablenkspiegels 5 kann der Spurpunkt des fokussierten Laserstrahles 3 auf der Speicherplatte 19 radial in der Fokusspur 20 um eine infinitesimale Weglänge s nachgestellt werden. Damit ist also eine einfache Möglichkeit für eine von der radialen Schwenkbewegung des Abtastkopfes 5 entkoppelten Feinpositionierung des Laserlichtstrahles 3 gegeben. Die Schwenkbewegung des Abtastkopfes 15 dient daher also ausschließlich der Grobpositionierung des fokussierten Laserlichtstrahles 3.

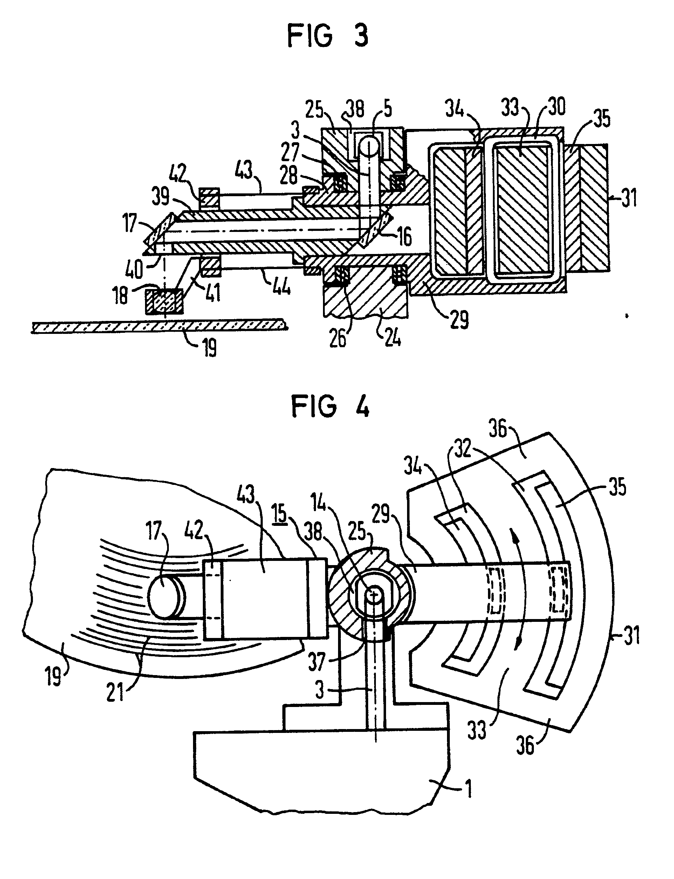

In den Fig. 3 und 4 sind nun zwei Ansichten des Abtastkopfes 15 gezeigt, die dessen mechanischen Aufbau im Detail zeigen. Als gestellfeste Einheiten sind zwei übereinander angeordnete Lagerböcke 24, 25 vorgesehen, die über Kugellager 26, 27 einen beidseitig gelagerten Schwenkkörper 28 in einer horizontalen Ebene rotationsbeweglich tragen. Dieser Schwenkkörper 28 ist im Bereich der Lagerstellen als Hohlkörper ausgebildet und besitzt einen seitlich vorspringenden, gabelförmig ausgebildeten Spulenarm 29, zwischen dessen Enden eine Spule 30 für den Antrieb des Drehpositionierers angeordnet ist.

Als Gegenstück zu der Spule 30 ist ein Magnetblock 31 vorgesehen. Wie aus der Draufsicht von Fig. 4 besonders deutlich zu erkennen ist, weist dieser Magnetblock 31 zwei zueinander konzentrische, in einer horizontalen Ebene als Kreisabschnitte ausgebildete nutenförmige Ausnehmungen 32 auf, die beidseits eines Mittelsteges 33 angeordnet sind. Die vom Spulenarm 29 getragene Spule 30 umschließt diesen Mittelsteg 33 mit ausreichendem Abstand, so daß sie frei in den Ausnehmungen 32 verschiebbar ist. Neben der Spulenwicklung ist in jeder der Ausnehmungen 32 ein entsprechend geformter Permanentmagnet 34 bzw. 35 angeordnet. Seitliche Jochstücke 36 komplettieren den Magnetkreis im gestellfesten Magnetblock 31. Zum Antrieb des Drehpositionierers wird die Spule erregt, die dazu an sich notwendige Stromzuführung z. B. über eine Flexleitung ist hier im einzelnen aus Gründen der Übersichtlichkeit nicht dargestellt, da es sich dabei um ein übliches Konstruktionsdetail handelt.

Zur Veranschaulichung der Führung des optischen Strahles ist in Fig. 4 schematisch das optische System 1 und der von ihm abgegebene Laserlichtstrahl 3 angegeben. Der Laserlichtstrahl 3 wird dem Abtastkopf 15 durch den oberen Lagerbock 25 hindurch zugeführt. Dieser weist dazu zunächst eine Horizontalbohrung 37 als Einlaß für den Laserlichtstrahl 3 auf.

Außerdem ist der obere Lagerbock 25 konzentrisch zur Schwenkachse 14 durchbohrt und besitzt im oberen Teil ein erweitertes Sackloch 38, in dem der Ablenkspiegel 5 angeordnet ist, der in seiner Normallage gegenüber dem horizontal einfallenden Laserlichtstrahl 3 unter 45° gekippt ist.

Dadurch wird der Laserlichtstrahl 3 vertikal durch die zentrische Bohrung des Lagerbockes 25 und eine konzentrische Bohrung im Schwenkkörper 28 hindurch nach unten abgelenkt. In den Hohlraum des Schwenkkörpers 28 ist ein tubenförmig ausgebildeter Spiegelträger 39 eingesetzt, dessen beiden Enden die zueinander parallelen, wiederum unter 45° geneigten Ablenkspiegel 16, 17 des Abtastkopfes 15 tragen. Der Laserlichtstrahl 3 ist somit im Schwenkkörper zentral geführt und verläßt, zur Schwenkachse 14 seitlich versetzt den Spiegelträger 39 durch eine Austrittsbohrung 40 in vertikaler Richtung.

Konzentrisch zu dieser Austrittsbohrung 40 und unterhalb davon ist das optische Abbildungssystem 18, hier dargestellt durch eine Sammellinse, angeordnet. Dieses Linsensystem ist in einem Objektivträger 41 gefaßt, der einen den tubusförmigen Spiegelträger mit ausreichendem Abstand umfassenden Rahmen 42 aufweist. Zur Nachfokussierung muß das optische Abbildungssystem 18 in vertikaler Richtung geringfügig verschiebbar sein. Dazu ist der Rahmen 42 des Objektivträgers 41 über ein Paar von Blattfedern 43, 44 die oberhalb bzw. unterhalb des Spiegelträgers 39 angeordnet sind, federnd am Schwenkkörper 28 befestigt.

Einzelheiten des Antriebssystemes für eine Vertikalbewegung des optischen Abbildungssystemes 18 sind hier in den Fig. 3 und 4 nicht dargestellt. Für den Antrieb kann jedoch, insbesondere wegen der geringfügigen Vertikalbewegung, ein Magnetsystem verwendet werden, das z.B. an dem Rahmen 42 des Objektivträgers 41 angreift. Auf diese Weise wird der aus dem Spiegelträger 39 austretende Laserlichtstrahl 3 mit Hilfe des ständig vertikal nachgestellten Abbildungssystemes 18 auf eine der Datenspuren 21 der Speicherplatte 19 fokussiert.

Das vorstehend beschriebene Ausführungsbeispiel verdeutlicht, daß es mit der vorgeschlagenen Aufbauweise gelungen ist, alle Steuervorgänge für die Grobpositionierung, die Feinpositionierung bzw. die Nachfokussierung mechanisch weitgehend zu entkoppeln und insbesondere dabei dann alle zur Strahlführung notwendigen Teile, die mit einer wesentlichen Masse behaftet sind, gestellfest auszuführen. Damit wird eine Leichtbauweise der beweglichen Teile erzielt, die deren Massenträgheitsmoment wesentlich herabsetzt, so daß mit der beschriebenen Positioniereinrichtung wesentlich verkürzte Zugriffszeiten und auch eine verbesserte Regelung bei der Spurauswahl, der Spurnachlaufsteuerung und der Fokusnachregelung ermöglicht wird.

Von den optischen Eigenschaften her betrachtet ist die beschriebene Strahlführung unabhängig von der Drehbewegung des Abtastkopfes abbildungsgetreu, d. h. das im reflektierten Lichtstrahl enthaltene Bild der Tangente einer selektierten Datenspur 21 erscheint auf den Fotodetektoren 10 bzw. 13 bis auf geringe Restfehler ortsfest, so daß hier keine besonderen Maßnahmen zur Fehlerkorrektur bei der Umwandlung des reflektierten Laserlichtstrahles in Rohdatensignale bzw. Spur- oder Fokusfehlersignale getroffen werden müssen. Es läßt sich sogar eine Invarianz der Polarisationsrichtung des reflektierten Laserlicht-strahles mit dieser Anordnung für eine Positioniereinrichtung erreichen, wenn die verwendeten Ablenkspiegel 5, 16 und 17 als dielektrisch beschichtete Reflektoren ausgebildet sind. Dies ist insbesondere in Verbindung mit einer Verwendung der beschriebenen Positioniereinrichtung bei magneto-optischen Speichern von Bedeutung, bei denen die Dateninformation in der Drehung der Polarisationsrichtung des reflektierten Laserlichtstrahles enthalten ist.

## Ansprüche

1. Positioniereinrichtung für einen optischen Datenspeicher mit einem gestellfest angeordneten optischen System (1) zum Erzeugen eines polarisierten parallelen Laserlichtstrahles (3) bzw. zum Auskoppeln eines reflektierten Lichtstrahles (7, 8), sowie gestellfest angeordneten Einrichtungen (6, 9 bis 13) zum Bewerten des reflektierten Lichtstrahles und mit einem zur Spurauswahl radial zu einer Speicherplatte (19) beweglich angeordneten Abtastkopf (15), der ein in vertikaler Richtung zur Speicherplatte auslenkbar angeordnetes, vom optischen System kinematisch entkoppeltes optisches Abbildungssystem (18) sowie Mittel (16, 17) zum Führen des Lichtstrahles aufweist, **dadurch gekennzeichnet,** daß im Strahlengang des Laserlichtstrahles (3) zwischen dem gestellfesten optischen System (1) und dem als Drehpositionierer ausgebildeten Abtastkopf (15) ein drehbeweglich gelagerter Ablenkspiegel (5) vom Abtastkopf (15) entkoppelt derart angeordnet ist, daß der abgelenkte Lichtstrahl im wesentlichen in der Schwenkachse (14) des Abtastkopfes (15) einfällt und von den Mitteln (16, 17) zum Führen des Lichtstrahles aufgenommen wird.

2. Positioniereinrichtung nach Anspruch 1, **dadurch gekennzeichnet,** daß die Schwenkachse (14) des Abtastkopfes (15), zur Drehachse (22) der Speicherplatte (19) parallel ausgerichtet, auf der Mittelsenkrechten zwischen zwei Schnittpunkten (A bzw. B) der äußersten Datenspur (210) bzw. der innersten Datenspur (211) der Speicherplatte mit einem Radialstrahl liegt, wobei der Abstand der Schwenkachse des Abtastkopfes zu diesem Radialstrahl derart gewählt ist, daß die kreisförmige Spur (20) des fokussierten Laserlichtstrahles (3) dem Radialstrahl angenähert diesen zweifach kreuzt.

3. Positioniereinrichtung nach Anspruch 1 oder 2, **dadurch gekennzeichnet,** daß der Abtastkopf (15) mit einem Schwenkkörper (28) in vertikaler Richtung doppelseitig in einem oberen und einem unteren gestellfesten Lagerbock (25 bzw. 24) gelagert ist, wobei der obere Lagerbock (25) eine zur Schwenkachse (14) konzentrische Durchgangsbohrung (38) zum Durchführen des Lichtstrahles (3) aufweist, daß der Schwenkkörper einen im wesentlichen senkrecht zur Drehachse seitlich vorspringenden Spulenarm (29), auf den eine tangentiale Auslenkkraft zum gesteuerten Verschwenken ausgeübt wird und diesem Spulenarm gegenüberliegend einen tubenförmig ausgebildeten Spiegelträger (39) aufweist, der je einen, am äußeren Ende bzw. im Drehmittelpunkt angeordneten, Ablenkspiegel (17 bzw. 16) trägt, die den Laserlichtstrahl, achsenparallel zur Schwenkachse, jedoch seitlich versetzt, auf das optische Abbildungssystem (18) richten.

4. Positioniereinrichtung nach Anspruch 3, **dadurch gekennzeichnet,** daß das optische Abbildungssystem (18) an dem Schwenkkörper (28) in vertikaler Richtung auslenkbar festgelegt ist und damit die Nachregelung der vertikalen Fokussierung des Laserlichtstrahles (3) von der Radialbewegung des Abtastkopfes (15) zur Spurauswahl entkoppelt ist.

5. Positioniereinrichtung nach einem der Ansprüche 3 oder 4, **dadurch gekennzeichnet,** daß dem Spulenarm (29) des Schwenkkörpers (28) ein gestellfester Magnetblock (31) zugeordnet ist, der in zwei zur Schwenkachse (14) konzentrischen kreisabschnittförmigen Ausnehmungen (32) je einen entsprechend geformten Permanentmagneten (33, 34) aufweist und daß an dem Spulenarm (29) eine Magnetspule (30) befestigt ist, die mit ihren Spulenschenkeln in diese Ausnehmungen eintaucht und einen Steuerstrom zum Verschwenken des Schwenkkörpers aufnimmt.

6. Positioniereinrichtung nach einem der Ansprüche 1 bis 5, **dadurch gekennzeichnet,** daß der im Strahlengang zwischen dem gestellfesten optischen System (1) und dem Abtastkopf (15) vorgesehene Ablenkspiegel (5) zur Schwenkachse (14) fluchtend in einer horizontalen Ausnehmung (37) des oberen Lagerbockes (25) vom Abtastkopf (5) entkoppelt angeordnet ist.

7. Positioniereinrichtung nach Anspruch 6, **dadurch gekennzeichnet,** daß der zur Feinpositionierung der Spurlage des fokussierten Laserlichtstrahles (3) bzw. zum raschen Springen in benachbarte Spuren (21) um einen vorgegebenen Winkelbereich (Δα) drehbar angeordnete Ablenkspiegel (5) um eine zur Achse des Spiegelträgers (39) parallele Achse (23) drehbar gelagert ist.

8. Positioniereinrichtung nach einem der Ansprüche 3 bis 7 zur Verwendung in einem magneto-optischen Speicher, **dadurch gekennzeichnet,** daß die Ablenkspiegel (5, 16, 17) als dielektrisch beschichtete Reflektoren ausgebildet sind, die eine vorgegebene Polarisationsrichtung des Laserlichtstrahles (3) im Strahlengang nicht beeinflussen.

## Claims

1. Positioning device for an optical data memory having an optical system (1), arranged fixed to a frame, for generating a polarized parallel laser light beam (3) and for coupling out a reflected light beam (7, 8) respectively, as well as devices (6, 9 to 13), arranged fixed to a frame, for evaluating the reflected light beam and having a sensing head (15) arranged in a radially movable manner relative to a storage disk (19) for the purpose of track selection, said sensing head having an optical imaging system (18), which is arranged to be deflectable in the vertical direction relative to the storage disk and kinematically decoupled from the optical system, as well as means (16, 17) for guiding the light beam, characterized in that in the beam path of the laser light beam (3) between the optical system (1), fixed to a frame, and the sensing head (15) constructed as rotary positioning device a rotationally movably mounted deflection mirror (5) is arranged decoupled from the sensing head (15), in such a way that the deflected light beam essentially impinges in the pivot axis (14) of the sensing head (15) and is received by the means (16, 17) for guiding the light beam.

2. Positioning device according to Claim 1, characterized in that the pivot axis (14) of the sensing head (15), aligned in parallel to the axis of rotation (22) of the storage disk (19), lies on the perpendicular bisector between two points of intersection (A and B) of the outermost data track (210) and the innermost data track (211) of the storage disk with a radial beam, the distance between the pivot axis of the sensing head and this radial beam being selected in such a way that the circular track (20) of the focused laser light beam (3) approximates to the radial beam and crosses it twice.

3. Positioning device according to Claim 1 or 2, characterized in that the sensing head (15) is mounted with a pivot member (28) in the vertical direction on both sides in an upper and a lower bearing block (24 and 25) fixed to a frame, the upper bearing block (25) having a through-hole bore (38) which is concentric to the pivot axis (14) for passing through the light beam (3), in that the pivot member has a laterally projecting coil arm (29) essentially perpendicular to the axis of rotation, on which a tangential deflecting force for the purpose of controlled pivoting is exerted, and has a tube-shaped mirror carrier (39) opposite this coil arm, said mirror carrier bearing in each case one deflection mirror (17 and 16) arranged at the outer end or in the centre of rotation, said deflection mirrors directing the laser light beam paraxial in relation to the pivot axis, but laterally offset, to the optical imaging system (18).

4. Positioning device according to Claim 3, characterized in that the optical imaging system (18) is fixed on the pivot member (28) to be deflectable in the vertical direction, and thus the readjustment of the vertical focusing of the laser light beam (3) is decoupled from the radial movement of the sensing head (15) for track selection.

5. Positioning device according to one of Claims 3 or 4, characterized in that a magnetic block, fixed to a frame, is assigned to the coil arm (29) of the pivot member (28), said magnetic block having in each case one correspondingly shaped permanent magnet (33, 34) in two recesses (32) of the shape of a circle sector and concentric to the pivot axis (14), and in that a magnetic coil (30) is secured on the coil arm (29), the coil legs of said magnetic coil dipping into these recesses and receiving a control current for the purpose of pivoting the pivot member.

6. Positioning device according to one of Claims 1 to 5, characterized in that the deflection mirror (5) provided in the beam path between the optical system (1), fixed to a frame, and the sensing head (15) is arranged aligned with the pivot axis (14) in a horizontal recess (37) of the upper bearing block (25) decoupled from the sensing head (5).

7. Positioning device according to Claim 6, characterized in that the deflection mirror (5) which is arranged to be rotatable around a predetermined angular range ($\Delta\alpha$) for the purpose of fine positioning of the track position of the focused laser light beam (3) and for the rapid skipping to adjacent tracks (21) is mounted to be rotatable around an axis (23) which is parallel to the axis of the mirror carrier (39).

8. Positioning device according to one of Claims 3 to 7 for use in a magneto-optical memory, characterized in that the deflection mirrors (5, 16, 17) are constructed as dielectrically coated reflectors which do not influence a predetermined polarization direction of the laser light beam (3) in the beam path.


## Revendications

1. Dispositif de positionnement pour une mémoire optique de données comportant un système optique (1) monté fixe par rapport à un châssis et servant à produire un faisceau de lumière laser parallèle polarisé (3) ou pour découpler un faisceau de lumière réfléchi (7, 8), ainsi que des dispositifs (6, 9 à 13) montés fixes par rapport au châssis et servant à évaluer le faisceau de lumière réfléchi, et une tête d'exploration (15), qui est montée de manière à être déplaçable radialement par rapport à un disque de mémoire (19) pour réaliser la sélection des pistes et comporte un système optique de formation d'images (18) disposé de manière à pouvoir être orienté dans la direction verticale par rapport au disque de mémoire et découplé du point de vue cinématique par rapport au système optique, ainsi que des moyens (16, 17) pour guider le faisceau de lumière, caractérisé par le fait que dans le trajet du faisceau de lumière laser (3) et entre le système optique (1) fixe par rapport au châssis et la tête d'exploration (4), réalisée sous la forme d'un dispositif de positionnement rotatif, est disposé un miroir déviateur (5) monté rotatif et découplé par rapport à la tête d'exploration (15), de telle sorte que le faisceau de lumière dévié arrive essentiellement suivant l'axe de pivotement (14) de la tête d'exploration (15) et est reçu par des moyens (16, 17) servant à guider le faisceau de lumière.

2. Dispositif de positionnement suivant la revendication 1, caractérisé par le fait que l'axe de pivotement (14) de la tête d'exploration (15), qui est alignée parallèlement à l'axe de rotation (22) du disque de mémoire (19), recoupe la médiatrice passant entre les deux points d'intersection (A et B) de la piste extérieure de données (210) et la piste la plus intérieure de donnée (212) du disque de mémoire avec un faisceau radial, la distance entre l'axe de pivotement de la tête d'exploration et ce faisceau radial étant choisie de manière que la piste circulaire (20) du faisceau de lumière focalisé (3) recoupe deux fois le faisceau radial.

3. Dispositif de positionnement suivant la revendication 1 ou 2, caractérisé par le fait que la tête d'exploration (15) équipée d'un corps pivotant (28) est supportée, sur ses deux côtés, dans la direction radiale, dans un bloc de palier supérieur et dans un bloc de palier inférieur (24 et 25), solidaires du châssis, le bloc de palier supérieur (25) comportant un perçage traversant (38) centré sur l'axe de rotation (14) et permettant le passage du faisceau de lumière (3), que le corps pivotant possède un bras porte-bobine (29), qui fait saillie latéralement sensiblement perpendiculairement à l'axe de rotation et auquel une force de déviation tangentielle est appliquée pour réaliser le pivotement commandé et comporte, à l'opposé de ce bras porte-bobine, un porte-miroirs (39) réalisé sous la forme d'un tube et portant des miroirs déviateurs respectifs (17 et 16) situés respectivement sur l'extrémité extérieure et au centre de rotation et qui orientent le faisceau de lumière laser parallèlement à l'axe de rotation, mais en en étant décalé, sur le système optique de formation d'images (18).

4. Dispositif de positionnement suivant la revendication 3, caractérisé par le fait que le système optique de formation d'images (18) est fixé sur le corps pivotant (28) de manière à pouvoir être orienté dans la direction verticale et que, par conséquent, le réglage d'asservissement de la focalisation verticale du faisceau de lumière laser (3) est découplé du déplacement radial de la tête d'exploration (15) utilisée pour la sélection des pistes.

5. Dispositif de positionnement suivant l'une des revendications 3 ou 4, caractérisé par le fait qu'au bras porte-bobine (29) du corps pivotant (28) est associé un bloc magnétique (31), qui est solidaire du châssis et possède, dans deux évidements (32) en forme de sections circulaires centrées sur l'axe de pivotement (14), des aimants permanents respectifs (33, 34) possédant des formes correspondantes, et que sur le bras porte-bobine est fixée une bobine magnétique (30), dont les branches pénètrent dans ces évidements et reçoit un courant de commande servant à faire pivoter le corps pivotant.

6. Dispositif de positionnement suivant l'une des revendications 1 à 5, caractérisé par le fait que le miroir déviateur (5) prévu dans le trajet du rayonnement entre le système optique (1) solidaire du châssis et la tête d'exploration (15) est monté en étant aligné sur l'axe optique (14) dans un évidement horizontal (37) du bloc de palier supérieur (25), en étant découplé par rapport à la tête d'exploration 15 .

7. Dispositif de positionnement suivant la revendication 6, caractérisé par le fait que le miroir déviateur (5), monté de manière à pouvoir tourner sur une plage angulaire prédéterminée ($\Delta \alpha$) pour réaliser la focalisation précise de la position de la piste du faisceau de lumière laser focalisée (3) et pour sauter rapidement à des pistes voisines (21), est monté de manière à pouvoir tourner autour d'un axe (23) parallèle à l'axe du porte-miroirs (39).

8. Dispositif de positionnement suivant l'une des revendications 3 à 7 destiné à être utilisé dans une mémoire magnéto-optique, caractérisé par le fait que les miroirs déviateurs (5, 16, 17) sont réalisées sous la forme de réflecteurs, qui sont recouverts d'un revêtement diélectrique et n'influent pas sur une direction de polarisation prédéterminée du faisceau de lumière laser (3) dans le trajet du rayonnement.

FIG 1

EP 0 214 529 B1

# FIG 2

## FIG 3

## FIG 4